Europäisches Patentamt

(19) European Patent Office    (11) Publication number: **0 174 763**

Office européen des brevets    **B1**

(12)    **EUROPEAN PATENT SPECIFICATION**

(45) Date of publication of patent specification: **25.07.90**    (51) Int. Cl.⁵: **B 65 C 3/08, B 29 C 63/18, F 16 H 25/14**

(21) Application number: **85306043.2**

(22) Date of filing: **23.08.85**

(54) Labeling apparatus.

(30) Priority: **04.09.84 US 646954**
**04.09.84 US 646955**

(43) Date of publication of application:
**19.03.86 Bulletin 86/12**

(45) Publication of the grant of the patent:
**25.07.90 Bulletin 90/30**

(84) Designated Contracting States:
**AT BE CH DE FR GB IT LI LU NL SE**

(56) References cited:
**FR-A-2 513 160**
**GB-A-1 386 685**
**NL-A-7 310 506**
**US-A-3 541 883**
**US-A-3 551 258**
**US-A-4 100 841**
**US-A-4 412 876**

(73) Proprietor: **AUTOMATED PACKAGING SYSTEMS, INC.**
**8400 Darrow Road**
**Twinsburg Ohio 44087 (US)**

(72) Inventor: **Easter, William M.**
**5245 Fairfield Oval**
**Solon Ohio 44139 (US)**
Inventor: **Gifford, Eric**
**908 Vineshire Road**
**Cleveland Heights Ohio 44121 (US)**
Inventor: **Wehrmann, Rick S.**
**6100 Stow Road**
**Hudson Ohio 44236 (US)**
Inventor: **Liebhart, Dana**
**3010 Archwood Place**
**Akron Ohio 44221 (US)**
Inventor: **Devol, James C.**
**1528 Stine Road**
**Peninsula Ohio 44264 (US)**

(74) Representative: **Fisher, Bernard et al**
**Raworth, Moss & Cook 36 Sydenham Road**
**Croydon Surrey CR0 2EF (GB)**

Courier Press, Leamington Spa, England.

## Description

### Technical Field

The present invention relates generally to apparatus and methods for labeling products and in particular to an apparatus and method for applying flexible, tubular labels to product containers.

### Background Art

The labeling of product containers, such as bottles, can be done by various methods. Early methods involved either printing information directly onto the container or alternately printing the information on a label which was then adhesively bonded to the container.

A more recent labeling method involves the application of a tubular, flexible label to the bottle. Typically, the label is preprinted with the product's name and product information and the label is then pulled over the container either manually or by machine.

The use of tubular, flexible labels have become a common way of labeling plastic, "2 liter" bottles which are popular containers for soft drinks. In general, these plastic containers are replacing glass bottles and metal cans more and more each year. The labeling of these types of containers can be time consuming and add significant cost to the product package.

Apparatus and methods for automatically placing tubular labels on product containers have been suggested. In Patent No. 4,412,876 owned by the present assignee, a relatively high speed label applying machine is disclosed. The labeling apparatus and label applying method described in this patent have become commercially successful and are used by soft drink bottling companies, among others.

Bottlers however, continuously strive to reduce operating costs. Typically, the labor costs are reduced by increasing the production speeds of the bottling and the label applying machinery. The material cost is reduced by reducing material thickness of the label itself.

It was found that the labeling machine described in the above referenced patent could reliably apply labels at the rate of approximately sixty bottles per minute. It is believed that operating the machine at much higher speeds would result in inconsistent or unreliable operation. Accordingly while the described machine is believed to have had the highest rate of label application that has been achieved commercially it is unable to meet the bottlers' desires for even greater throughput.

It must be remembered that the labels themselves must withstand the rigors of the label applying process. By way of summary, the labels are usually supplied in the form of a continuous web. The individual labels are defined by longitudinally spaced, transverse perforations. The web is fed over a mandrel positioned above the bottle to be labeled. A gripper assembly grips the bottom of the label and pulls it downwardly over the bottle. At a predetermined position, the web is braked to prevent further movement thus causing the label held by the gripper assembly to sever itself from the remainder of the supply.

As the operating speed of the machine is increased it should be apparent that the forces applied to the web and the label being applied can be significant. As the material thickness of the web is decreased, the risk of damage to the label itself increases. Thus, it is not practical to simply increase the overall speed of the machine to increase the machine throughput. It is believed that the labels could not withstand the added stress or alternatively if the labels were made strong enough to withstand the forces they would be excessively heavy and therefore too costly.

The machine disclosed in U.S. Patent No. 4,412,876 included a labeling assembly that was reciprocally actuated through a labeling cycle by a harmonic crank mechanism rotated by a drive motor. The bottles to be labeled were fed into the labeling machine by a separate drive arrangement including a clutch and drive motor that were energized to actuate an L-shaped pusher assembly for advancing the bottles. Although these mechanical arrangements operate satisfactorily it is believed that they could not reliably accommodate the higher throughput speeds desired by the bottling industry.

The labeling assembly of the machine disclosed in U.S. Patent No. 4,412,876 included a clamping arrangement by which a label to be applied was gripped. At the commencement of the labeling cycle, the region clamped by the labeling assembly was stretched in order to clear the periphery of the bottle. It has been found that as the thickness of the label material is reduced, the stretching of the lower region of the label after engagement by the clamp, can cause permanent distortion in the label. This distortion compromises the appearance of the label. Since the cosmetic appearance of the label after installation is important to the packager, it is believed that the bottling industry would find the distortion unacceptable.

### Disclosure of the Invention

The present invention provides a new and improved apparatus and method for applying tubular, flexible labels to product containers such as plastic soft drink bottles. The disclosed apparatus is capable of extremely high speed operation without damage to bottles or labels and can install labels having reduced material thickness with minimal distortion to the label.

According to one aspect of the present invention there is provided a labeling apparatus, comprising:

a) a housing and frame structure defining a work station;

b) a labeling assembly mounted for reciprocating movement on said frame structure;

c) said labeling assembly including a tubular label supply station and being operative to move through a label applying stroke and a return stroke, and

d) drive means for actuating said labeling assembly characterised in that said drive means includes means for driving said labeling assembly through said labeling stroke at a first speed and driving said labeling assembly through said return stroke at a second speed, said second speed being greater than said first speed.

The invention also provides a drive system for actuating a labeling assembly forming a part of a labeling machine for applying tubular, flexible labels to product containers, comprising:

a) carriage means mounted for reciprocal movement including means for mounting said labeling assembly, and

b) carriage actuating means characterised in that said carriage actuating means includes a drive cam defining an asymmetrical profile such that said labeling assembly is driven through a label applying stroke by said carriage means at an average speed that is less than an average speed at which said labeling assembly is return driven to a label receiving position by said carriage means.

The invention also provides a process for applying tubular, flexible labels to product containers, as specified in Claim 24.

The labeling assembly is driven through a label applying stroke and a return stroke. During the label applying stroke a label is pulled onto the product container and severed from the supply. Near the end of the label applying stroke the label assembly releases the label and then is retracted to allow the labeled bottle to exit the work station and to allow an unlabeled bottle to advance into the work station. The next label to be applied is engaged just prior to beginning the label applying stroke.

According to the invention, the drive system actuates the labeling assembly at different rates and/or accelerations during the label applying and return strokes. The average speed of the label applying stroke is slower than the return stroke. This permits an optimized rate of label application without risk of damage to the label as it is being applied to the container. At the same time, throughput is increased, as contrasted with the described prior machine, by substantially increasing the rate at which the labeling assembly returns after applying a label. The rate of the label applying stroke is slower than the return stroke, thus reducing the risk of a misfeed or damage to the label.

In the preferred embodiment, the drive system includes a cam rotatably driven by a suitable drive motor. The cam defines a profile having a rather steep rise for actuating the labeling assembly through the return stroke and a gradual drop for driving the assembly through the label applying stroke at lower average speed as compared to the return stroke.

In the exemplary embodiment, a label assembly actuating arm is pivotally connected to the frame. The arm carries a cam follower which rides against the actuating cam. The arm is also connected to the labeling assembly so that motion transmitted to the cam follower by the cam produces a reciprocating motion in the labeling assembly.

According to a feature of the invention, the cam follower is biased into abutting contact with the cam. In the preferred construction, the biasing is achieved by a pneumatic cylinder which is pressurized with a predetermined air pressure. The air is captured in the air cylinder and acts as a pneumatic spring. In accordance with this feature, the contact between the cam follower and cam is monitored by a sensor. Should the cam follower separate from the cam as would occur in the case of a malfunction in the labeling assembly, movement in the drive system is immediately arrested. Preferably, rotation in the cam is terminated virtually instantly by a brake system which is actuated in response to the sensed malfunction.

This feature provides an additional advantage. Normally, a malfunction or jam in the label applying apparatus requires that the apparatus be raised in order to clear the malfunction. In some prior machines, a counterweight was used to balance the weight of the labeling assembly so that an operator could manually raise the assembly when necessary. The pneumatic cylinder, although normally acting as a biasing device, is also used as a lifting device for the labeling assembly. In particular, when the operator desires to manually raise the labeling assembly, a control is provided for pressurizing and extending the pneumatic cylinder. The extension of the cylinder raises the labeling assembly. When the malfunction has been corrected, the operator merely actuates the control to depressurize the cylinder thus lowering the labeling assembly and associated actuating lever into contact with the drive cam.

According to another feature of the invention, a pusher assembly for indexing or advancing product containers into the labeling station is actuated by the same drive system that actuates the labeling assembly. This feature eliminates the need for a separate clutch and drive motor for operating the advancing mechanism.

In the preferred embodiment, the drive system includes an indexing cam, co-driven with the main drive cam. The second cam actuates linkage connected to the pusher assembly. By driving both the primary and indexing cams with a common device, i.e. shaft, synchronization of the labeling operation with the container indexing function is automatically achieved. The linkage for actuating the pusher assembly also includes a pressurized pneumatic cylinder for exerting a biasing force on the associated cam follower to maintain contact between it and the indexing cam.

According to another feature of the invention, an improved container stabilizing device is employed to maintain the position of a container at the labeling station. In the labeling machine disclosed in patent No. 4,412,876, a vacuum port was located at the labeling station which during operation was connected to a continuous source of vacuum. A perforate plate covered the vacuum port and formed a support for the bottle being labeled. At the conclusion of the labeling process, the label container was pushed off the vacuum port by next adjacent container.

According to this feature of the invention, the container to be labeled is supported by a vacuum pedestal, including a vacuum port, located in alignment with the labeling apparatus, that includes a valve for controlling the communication of a vacuum source with the vacuum port. With the disclosed arrangement, the vacuum generated gripping force is terminated at the conclusion of the labeling process to facilitate sliding movement of the bottle off the vacuum pedestal. In the preferred method, the valve is reopened to communicate vacuum to the port as the next bottle to be labeled advances onto the pedestal.

In the preferred embodiment of this feature, a filter compartment is located intermediate the vacuum pedestal and the vacuum source to prevent the entry of contaminants into the vacuum system. In accordance with this feature, the conduit and filter compartment act as an accumulator when the communication of vacuum to the port is terminated by the valve. As a result of the accumulating effect, when the valve initially opens, a large inrush of air occurs and enhances the gripping force on the advancing bottle. At the initial opening of the valve, the sudden surge of air occurs at a rate that is greater than the steady state flow of air into the port and produces an increased temporary gripping force. Since the valve opens as the product to be labeled is advancing onto the perforate port, this initial inrush serves to grip and quickly stabilize the product on the port.

The disclosed apparatus and method applies tubular labels to product containers such as soft drink bottles at high speeds without degrading the appearance of the label or the reliability of the machine. This is achieved by a drive arrangement that applies the label to the product at an average speed that is lower than the average speed at which the labeling assembly is retracted. For an example, it has been found that a drive system embodying the present invention can actuate the label applying apparatus at a rate equivalent to 120 operations per minute during the return stroke. During the label applying stroke the label assembly is driven at a rate corresponding to 60 label applications per minute. Although the label applying portion of the operating cycle moves at a rate comparable to that of a prior machine, the increased speed at which the label assembly is returned results in an effective production rate for the improved machine of 90 label applications per minute. This production rate is substantially greater than the production rate of prior machines.

According to the preferred and illustrated embodiment, the labeling apparatus also includes a pair of gripper assemblies which operate together to apply a tubular, flexible label or sleeve to a product container positioned at a labeling station. In the illustrated embodiment, the gripper assemblies are adjustably mounted to a pair of reciprocally movable slide rods such as those shown in Patent No. 4,412,876 which is hereby incorporated by reference.

Each gripper assembly includes a reciprocally movable cuff for engaging the inside of the label to be applied and a clamping member for clamping the label to the cuff. In the illustrated construction, the cuff and clamping member each form part of separate subassemblies, both subassemblies being slidably mounted to a gripper assembly frame.

In the preferred method of operation, at the commencement of a labeling cycle, the gripper assemblies are raised to a point where the cuffs of each gripper assembly enter the inside of the label to be applied. The cuff subassemblies of each assembly are then moved outwardly, i.e., away from the axis of the bottle, so as to expand the lower region of the label in order to clear the periphery of the bottle. As the cuffs are driven outwardly, the lower region of the label engaged by the gripper assemblies is allowed to expand uniformly around its entire circumference.

Unlike the prior art, the gripper assemblies do not clamp the label until the label has been stretched by the cuff subassemblies. The disclosed apparatus and method eliminates the localized stretching that could occur in prior label installing arrangements.

According to a preferred feature of the invention, as the cuff subassemblies reach their expanded positions, clamping surfaces on the cuffs contact gripper pads forming part of the clamping subassemblies. The label to be applied is thus clamped between a gripper pad and the cuff clamping surface of each gripper assembly.

The gripper assemblies are then driven toward the bottle in order to pull the clamped label over the bottle. In the preferred embodiment, each cuff is moved outwardly, slightly, to further expand the lower region of the label to provide added clearance.

When the label is pulled into position on the bottle, the clamping subassemblies are retracted in order to release the clamping force on the lower region of the label. The friction exerted by the container inhibits further movement of the label. The gripper assemblies continue their travel enabling the cuff subassemblies to completely release the lower region of the applied label. After release, the gripper assemblies are retracted to the initial position in order to grip and apply the next label.

According to a feature of the invention, each cuff subassembly is moved outwardly at the commencement of the labeling cycle by a fluid pressure operated actuator. When the cuffs are moved outwardly by the actuators, the clamping surface of each cuff contacts the gripper pad of its associated clamping subassembly. The clamping subassemblies are biased toward the clamping surface of the associated cuff subassembly by a biasing element such as a spring. The clamping force exerted on the cuff is determined by the gripper biasing element.

In the preferred and illustrated embodiment, the slight outward movement of each gripper assembly during the downward movement of the labeling apparatus, is achieved by a cuff drive cam and cam roller arrangement associated with each gripper assembly. In the exemplary embodiment, the cuff subassembly mounts the cam roller. An associated cam including a cam ramp is mounted vertically at the labeling station in alignment with the cam roller. As the labeling apparatus moves downwardly, the cam roller of each gripper assembly contacts the cam ramp of an associated cuff drive cam which causes the cuff subassemblies to move outwardly an additional amount thus further expanding the label.

The use of a cam roller and cam mechanism not only provides additional expansion of the label but more importantly insures that the cuffs are driven to, and remain, outside the periphery of the bottle as the labeling apparatus is driven through its label applying strobe. The outward position of the cuffs is maintained even if a failure in the cuff actuator should occur.

Each gripper assembly also includes a lever arrangement including a roller engageable with another cam including a cam ramp mounted at the labeling station for releasing the clamping force on the label when the label reaches a predetermined position on the container being labeled. The lever arrangement is used to drive the clamping subassemblies away from the cuffs near the bottom of the label applying stroke. When the lever engage the cam ramp, the clamping subassemblies are moved outwardly so that the label clamped between the gripper pads and the cuffs is released.

According to another feature of the invention, a stabilizing cam roller is also mounted to each gripper assembly. The stabilizing cam roller is oriented with its axis of rotation rotated 90° from the cam roller used to move the cuff subassemblies outwardly. In the preferred arrangement, the stabilizing cam roller of each gripper assembly is engageable with another surface of the associated cuff drive cam. The engagement between the roller and the cam prevents the gripper assemblies from twisting about their associated slide rods when the gripper release cam is engaged by the associated release lever.

The present invention thus provides an improved labeling assembly in which localized stretching of a label being applied is minimized. Unlike the prior art, the entire circumference of the lower region of the label is expanded prior to clamping the label. The disclosed gripper assemblies are capable of applying labels, constructed from relatively thin materials.

Additional features of the invention will become apparent and a fuller understanding obtained by reading the following detailed description made in connection with the accompanying drawings.

Brief Description of Drawings

Figure 1 is an isometric view of a labeling apparatus constructed in accordance with a preferred embodiment of the invention;

Figure 2 is a top plan view of the labeling apparatus;

Figure 3 is a side elevational view of the apparatus, with covers removed to show interior detail;

Figure 4 is a front, fragmentary view of the upper portion of the labeling apparatus, with covers removed;

Figure 5 is a front, fragmentary view of the lower portion of the labeling apparatus, with covers removed;

Figure 6 is a plan view of the mechanism shown in Figure 5;

Figure 7 is a rear, fragmentary view of the lower portion of the labeling apparatus;

Figure 8 is a front elevational view of a labeling assembly forming part of the labeling apparatus; and,

Figures 9-11 illustrate the construction of a vacuum valve for controlling the communication of a vacuum source with a vacuum pedestal.

Figure 12 is a front, elevational view of a gripper assembly forming part of the labeling assembly shown in Figure 8;

Figure 13 is a top plan view of the gripper assembly; and,

Figure 14 is a sectional view as seen from the plane indicated by the line 14-14 in Figure 12.

Best Mode for Carrying Out the Invention

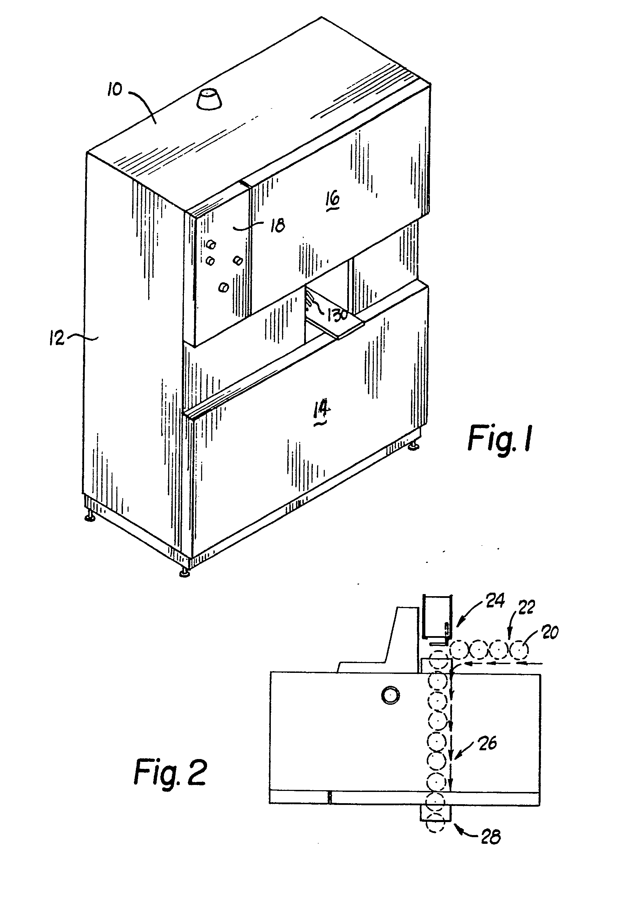

Figure 1 illustrates the external appearance of a labeling apparatus constructed in accordance with the preferred embodiment of the invention. The labeling apparatus includes a sheet metal cabinet formed by a plurality of removable covers 10, 12, 14, 16. A control panel 18 contains a plurality of operator controls for controlling the operation of the apparatus. The disclosed labeling apparatus is adapted to apply tubular, flexible labels to containers such as "2 liter" soft drink bottles. Referring also to Figure 2, the bottles 20 are brought to the machine on a conveyor, indicated by the reference character 22. An L-shaped pusher assembly, indicated generally by the character 24 advances bottles towards a labeling station indicated generally by the reference character 26. After it is labeled, the bottle is pushed out of the labeling position by the next advancing bottle. An exit conveyor (not shown) carries the labeled bottles from the exit of the labeling apparatus, indicated generally by the reference character 28.

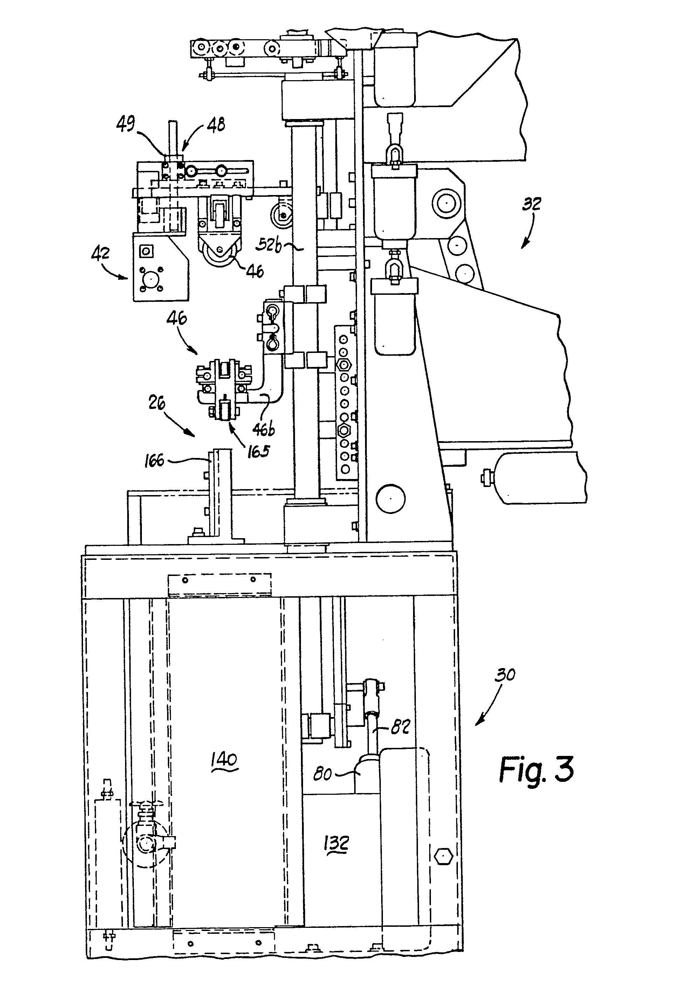

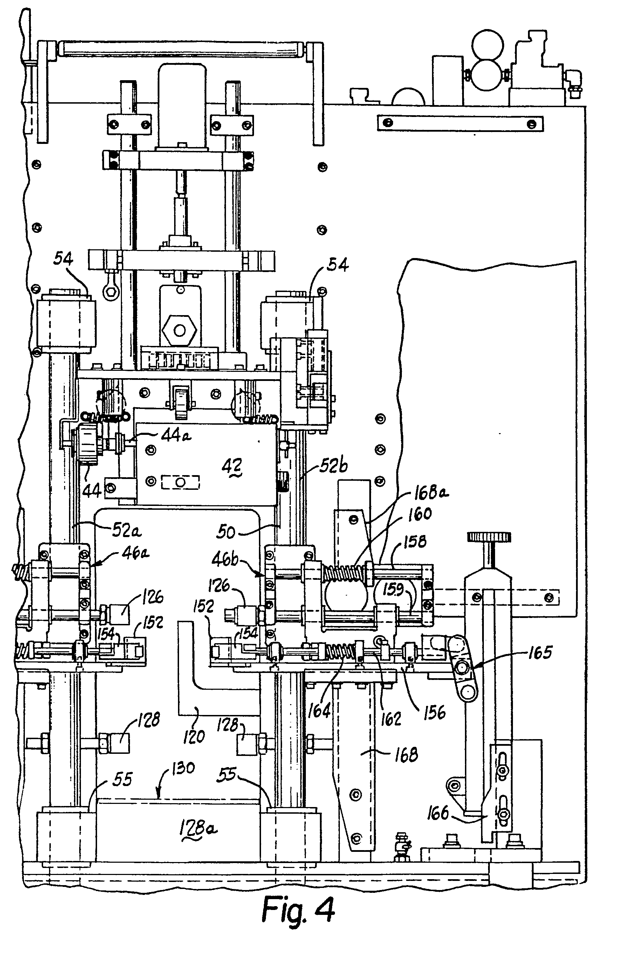

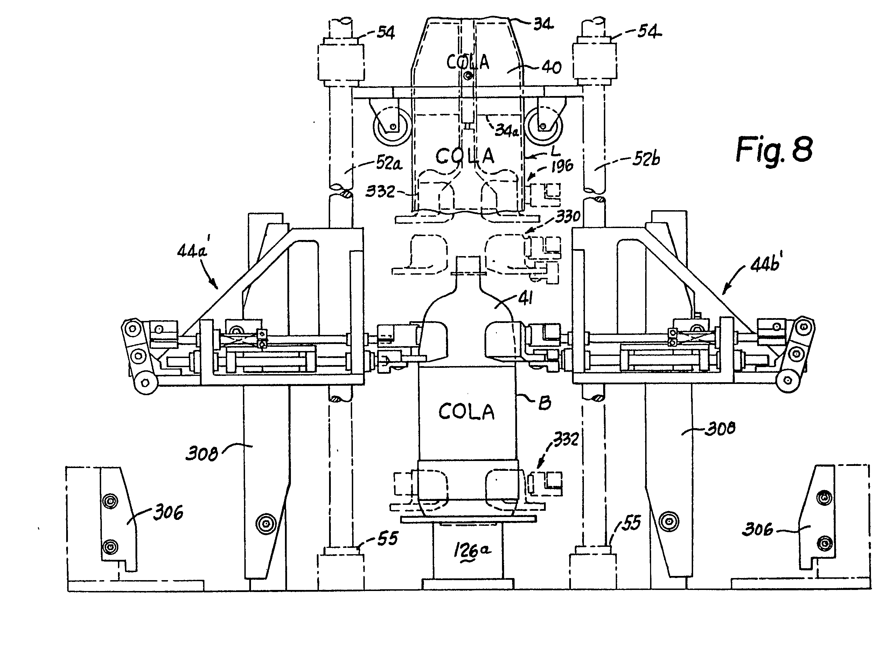

Turning now to Figure 3, the internal construction of the labeling apparatus is illustrated. A base or lower portion 30 of the apparatus supports and mounts a drive system constructed in accordance with the preferred embodiment of the invention. An upper portion 32 defines the labeling station indicated generally by the reference character 26. Referring also to Figure 4, the upper portion 32 includes a supply of labels (not shown) preferably comprising a continuous tubular web 34 (shown only in Figure 8) wound on a supply spindle (not shown), each individual label being defined by a pair of longitudinally spaced, transverse perforations 34a. As is fully disclosed in U.S. Patent No. 4,142,876, the web of labels is fed over a mandrel 40 (shown in Figure 8 only) and then pulled over a product container 41 positioned below the mandrel. During the application process the label being applied is severed from the web 34.

Referring to Figures 3, 4 and 8, the apparatus for applying the label to a container positioned at the labeling station includes a label position detector 42 and a web braking device 44. The detector 42 and other parts are omitted from Figure 8 in order to illustrate the details of the mandrel 40 and other related components. In the disclosed embodiment, the web braking device 44 comprises a solenoid operated plunger 44a (shown in Figure 4) which when actuated, clamps the web against the stationary mandrel so that as the leading label is pulled downwardly by a label applying assembly 46, the leading label is severed from the remainder of the web along the label defining perforations 34a (shown in Figure 8).

The web position detector 42 senses indicia on each successive label when such labels are properly positioned with respect to the mandrel 40 and produces a web braking signal. The web position indicia are accurately located on each label and the detector 42 and mandrel 40 are positioned so that the lowermost edge of each label is aligned with the detector 42. The detector is preferably designed to detect wave shifted light emitted by a normally invisible, or nearly invisible, registration mark printed on each label. The preferred detector 42 can be constructed as disclosed by United States application Serial No. 253,193 filed April 27, 1981 and entitled "Control Marking Detector". Because additional details of the construction and operation of the detector 42 can be had by consulting the above referenced application, no further detailed description is necessary here. The detector 42 is adjustably supported relative to the labeling station 26 by a support assembly 48. The support assembly 48 includes clamps 49 by which the assembly 48 is connected to supporting rods 51 to enable the support assembly 48 to be adjustably positioned vertically as desired and clamped in place.

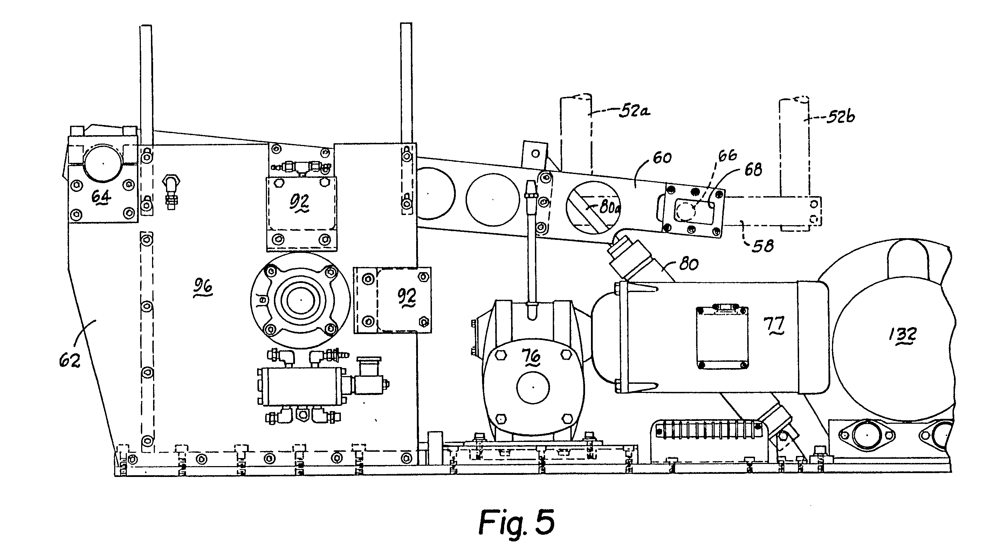

The label applying assembly 46 is reciprocally movable in a vertical plane by a carriage 50 operatively connected to the drive system located in the base 30 of the apparatus. Referring also to Figure 5, the carriage 50 includes a pair of slide rods 52a, 52b that are slidably supported by upper and lower slide bearings 54, 55. As seen in Figure 4, left and right hand halves 46a, 46b of the labeling applying apparatus 46 are adjustably clamped to the left and right slide rods 52a, 52b, respectively.

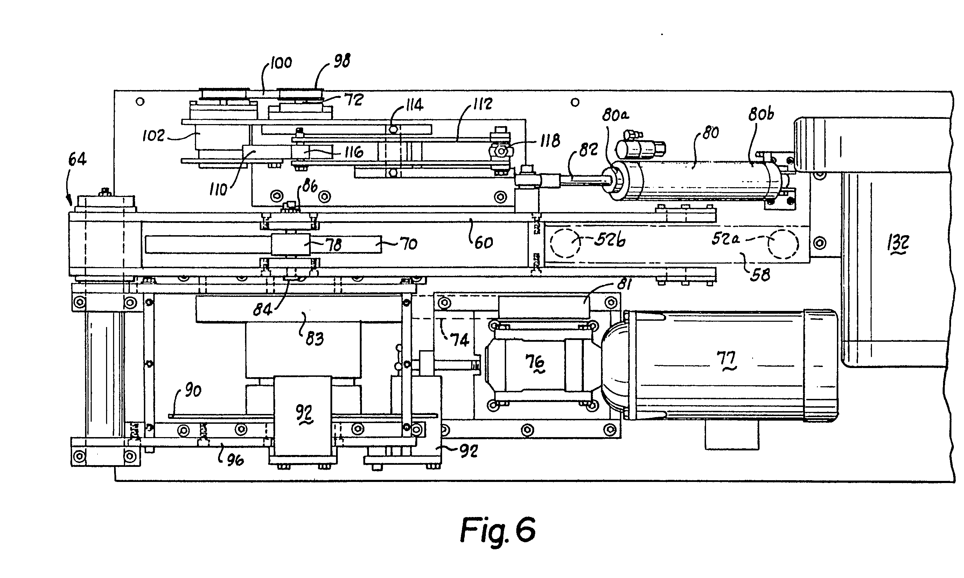

Turning now to Figures 5 and 6, the drive system for the labeling assembly 44 is shown in detail. The reciprocal slide rods 52a, 52b are rigidly interconnected by a cross piece 58. Reciprocal, vertical movement is imparted to the cross piece 58 and hence the slide rods 52a, 52b by a lever arm 60. As viewed in Figure 5, the lever arm 60 is pivotally connected at its leftmost end, to a fixed base plate 62. Preferably, the pivoted end is journaled in a bearing assembly 64. Since the guide rods 52a, 52b are constrained to vertical movement only, a lost motion connection is used between the right end of the lever arm 60 (as viewed in Figure 5) and the cross piece 58. In particular, a carriage pin 66 attached to the cross piece 58 is received in a slot 68 defined at the right end of the lever arm. The pin 66 may include a bearing for reducing the friction between the slot structure 68 and the pin 66. It should be apparent that as the lever arm moves upwardly or downwardly, the change in radial distance between the pivot 64 and the carriage pin 66 is accommodated by transverse movement of the pin within the slot 68.

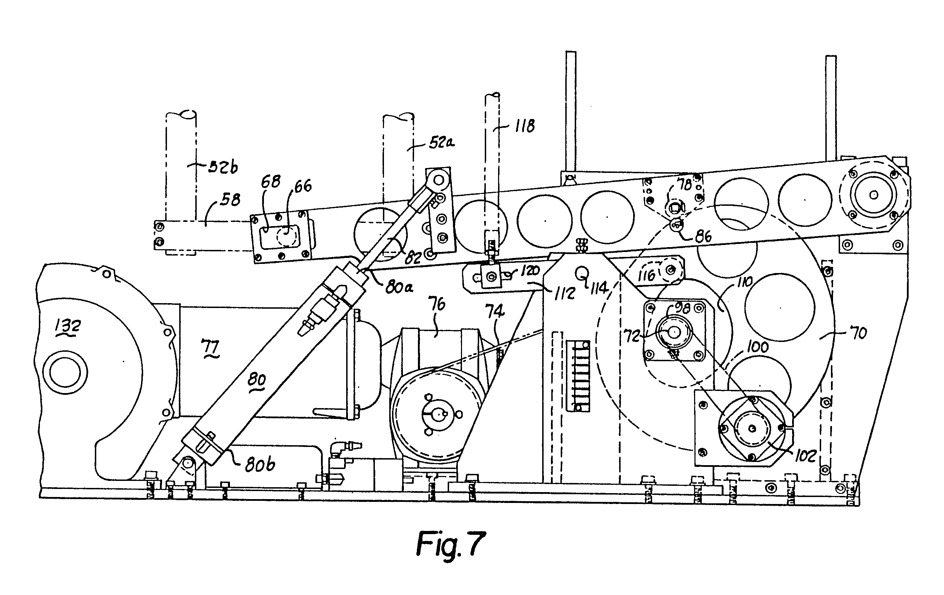

Referring also to Figure 7, the lever arm 60 is raised and lowered about its pivot 64 by a main drive cam 70. The cam is rotated about a shaft 72 by a timing belt or chain 74 operatively coupled to a gear box 76. The gear box in turn is coupled to a suitable drive motor 77. The timing belt 74 is reeved around drive and driven timing sprockets 81, 83 attached to the gearbox 76 and shaft 72, respectively (shown best in Figure 6).

The lever arm 60 mounts a cam follower 78 intermediate its ends that rides against the cam 70. Rotation of the cam 70 produces angular, reciprocating motion in the lever arm 60 about its pivot 64 which in turn imparts vertical, rectilinear reciprocating movement in the slide rods 52a, 52b and hence the label applying assembly 46.

According to the invention, the cam follower 78 is biased into continuous contact with the periphery of the cam 70 by a biasing device 80. In the preferred embodiment, the biasing device comprises a pneumatic cylinder pressurized to a predetermined pressure. Preferably, the cylinder is initially filled with a relatively low pressure, i.e. 0.7 to 1.4 kg per sq. cm (10-20 psi). Once pressurized, the discharge of the pressurized air is prevented as by a check valve (not shown) and the cylinder thus acts as a pneumatic spring.

When the cam follower 78 is at the lowest position on the cam 70, an actuating rod 82 of the air cylinder 80 is in its retracted position. At this position, the pressure in the cylinder would be the minimum pressure. As the cam 70 rotates to raise the lever arm 60, the cylinder 80 is forced to extend and in so doing compresses the air charge within the cylinder thus increasing the downwardly directed force the cylinder applies to the lever arm 60. The cam follower 78 is thus constantly urged into contact with the cam 70.

According to a feature of the invention, a sensor monitors the contact between the cam roller 78 and the main drive cam 70 and deactivates the drive system should separation between the follower 78 and cam 70 be detected. In the preferred embodiment, the sensor is carried by the lever arm 60 and may comprise a light source 84 and a light sensor 86 disposed on opposite sides of the cam follower 78, in alignment with the region of contact between the cam 70 and the cam follower 78 (shown only in Figures 6 and 7). As long as the cam follower remains in contact with the cam, light from the source is blocked. Should the cam follower separate, the light sensor 86 responding to the detection of light would deactivate the drive motor 77 to stop rotation of the cam 70.

Referring in particular to Figures 5 and 6, the drive system preferably includes a braking arrangement for arresting motion in the cam virtually instantaneously upon sensing separation of the cam 70 and cam follower 78. This is achieved by a brake disc 90 (shown in Figure 6) which is also mounted to the shaft 72 and co-driven with the cam 70. A pair of disc brake calipers 92 are mounted to a braking plate 96 and overlie portions of the disc 90. Suitable pneumatically operated brake disc calipers are available from Horton Manufacturing Company.

With the present invention, when a malfunction is sensed, movement in the drive system is stopped immediately. Separation of the cam follower 78 from the cam 70 will normally occur due to a jam or other malfunction in the label applying assembly 46. Once separation of the cam and cam follower is sensed the disc brake 90 inhibits the cam from recontacting the cam follower which could otherwise aggravate the malfunction.

The use of an air cylinder to bias the lever arm 60 into contact with the cam 70 provides an added feature of the invention. It has been found that when a jam or other malfunction occurs in the labeling applying assembly 46, the carriage 50 including the slide rods 52a, 52b and labeling assembly 46 must ordinarily be raised in order to correct the malfunction. In the prior labeling apparatus, the unit was counterweighted in order to enable an operator to manually raise the label applying assembly 46. With the present invention, this procedure has been simplified. Referring in particular to Figure 7, in normal operation, the rod end 80a of the air cylinder 80 is pressurized in order to apply a downwardly directed biasing force to the lever arm 60. However, when a malfunction occurs, an operator control (not shown) located on the operator control panel may be actuated to pressurize the cylinder end 80b of the air cylinder in order to extend the rod 82. It should be apparent that extending the rod 82 causes the lever arm 60 to be driven upwardly and hence raises the slide rods 52a, 52b and label applying assembly 46. When the malfunction has been corrected, the cylinder end 80b is depressurized in order to lower the lever arm 60 until the cam follower 78 contacts the cam 70.

Referring to Figures 6 and 7, the shaft 72 also mounts a small timing sprocket 98. A timing belt 100 connects the timing sprocket 98 to a digital encoder 102. The encoder 102 is connected to an electronic control system (not shown) forming part of the labeling apparatus which effects control of the various labeling functions. The digital encoder 102 generates synchronizing signals for the electrical control system so that the various machine functions are coordinated with the position of the main drive cam 70.

Referring to Figures 6 and 7, the drive shaft 72 also mounts a second cam 110, smaller than the main drive cam 70. The cam 110 reciprocally drives a product indexing lever 112. The lever 112 is centrally pivoted at a pivot assembly 114 and mounts a cam follower 116 at its rightmost end (as viewed in Figure 7). The leftmost end is pivotally connected to a drive rod 118. A slot 120 formed at the left end of the lever 112 provides for a radial adjustment for modifying the stroke of the rod 118.

The drive rod 118 is connected to a pusher assembly that is operative to advance containers into the labeling station 26. Referring to Figure 4, the pusher assembly includes an L-shaped arm 120 that mounts a pusher plate (not shown). A linkage (not shown) connected to the actuating rod 118 converts vertical, reciprocating motion in the actuating rod 118 into transverse reciprocating motion in the L-shaped pusher arm towards and away from the labeling station 26. In the preferred embodiment an air cylinder (not shown) like the air cylinder 80 is used to bias the lever arm 112 into contact with the product indexing cam 110. By mounting both the main drive cam 70 and the indexing drive cam 110 on the common shaft 72, synchronization between the labeling and advancing functions is automatically achieved. The cam drive system for the advancing mechanism also eliminates the separate drive motor and clutch mechanism shown and described in U.S. Patent No. 4,412,876 and therefore simplifies the overall product indexing function of the labeling machine.

Referring to Figure 7, the drive system of the present invention allows the machine to be operated at a higher production rate without comprising the quality or reliability of the label applying operation. This is accomplished by configuring the main drive cam 70 to impart a differential rate of motion to the label applying assembly 46 during the label applying and return strokes. As seen in Figure 7, the profile of the cam 70 is asymmetrical in shape. When the cam 70 is rotated in the counterclockwise direction, the fall of the cam occurs much more gradually than the rise of the cam. As a result, the downward movement of the labeling assembly 46 occurs at a lower average speed than its upward or return movement. In the preferred cam profile, the fall of the cam occurs over 240° of rotation whereas the rise occurs in 120° of rotation. As a result, the labeling assembly 46 retracts at twice the rate it applies a label.

With the preferred configuration, the rate at which containers are labeled by the labeling machine can be increased without adversely affecting the quality and reliability of the label applying procedure. The increased speed is achieved by increasing the rate at which the label applying assembly is returned to its starting position. The actual label applying motion occurs at an average speed and/or acceleration levels comparable to the speed at which a harmonically driven label assembly would apply the labels.

Turning now to Figure 8, additional details of the labeling station are illustrated. The container to be labeled is advanced to a position below the mandrel 40. Transverse guides 126, 128 (shown only in Figure 4) center and guide the bottle into the labeling position below the mandrel 40 (shown only in Figure 8). A vacuum pedestal 126a is aligned with the mandrel and operates to stabilize or clamp the bottle in proper alignment. The pedestal includes a perforate region 130 (a portion of which is shown in Figure 1) which communicates with a source of vacuum. The source comprises a vacuum pump 132 (shown in Figures 3 and 5-7). Conduits (not shown) connect the perforate region 130 with the vacuum source. In Figure 4, the vacuum pedestal is obscured by a cover 126a. In the preferred embodiment, a filter compartment indicated generally by the reference character 140 is disposed in the flow path intermediate the perforate region 130 and the vacuum pump 132. The filter prevents dirt and other foreign matter, drawn into the vacuum pedestal 126a, from entering the vacuum motor.

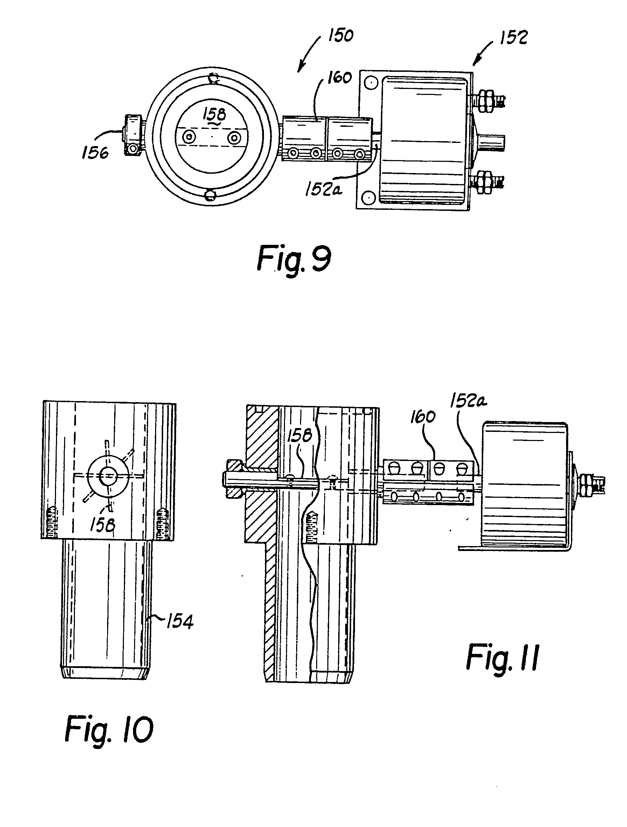

According to a feature of the invention, and as shown in Figures 9-11, the pedestal includes a butterfly valve assembly 150 rotated between opened and closed position by a rotary solenoid actuator 152. The lower end of valve assembly 150 includes a nipple 154 for connection to a vacuum conduit (not shown). A shaft 152a of the solenoid actuator 152 is coupled to a valve shaft 156 on which a butterfly plate 158 is mounted, by a coupling 160.

The actuation of the solenoid valve is controlled by the electrical control system and is synchronized with the bottle advancing mechanism. When the labeling cycle has been completed the valve closes to terminate the vacuum force on the labeled container to facilitate its advancement out of the labeling station 26. As the product leaves the labeling station 26, the valve is reopened in order to exert a clamping force on the next container. When the valve is closed, the conduits and filter compartment act as an accumulator so that when the valve is initially opened, a large inrush of air occurs and enhances the initial gripping action and aids in the stabilization and positioning of the bottle to be labeled.

The construction and operation of the labeling apparatus 46, specifically the labeling assemblies 46a, 46b, is fully set forth in Patent No. 4,412,876, and a complete and exhaustive description is therefore unnecessary. By way of summary, the assemblies 46a, 46b are essentially mirror images of the other. Only the assembly 46b will therefore be described. Each assembly includes a cuff 152 and an associated gripper pad assembly 154 which when clamped together are operative to grip a lower portion of a label to be applied. The cuff 152 forms part of a laterally movable base plate 156 which is slidably mounted on a pair of guide rods 158, 159. A spring 160 biases the base plate towards the center-line of the labeling station.

The gripper pad assembly is slidably mounted on the base plate by a pair of slide rods 162 (only one slide rod is shown). A spring 164 biases the gripper pad assembly 154 towards the cuff 152. A lever arrangement 165 cooperates with a cam 166 to produce transverse movement in the gripper assembly 154 at predetermined positions during a labeling cycle. A cam roller (not shown) forming part of the base plate structure 156 coacts with a cam 168 defining a ramp 168a.

In normal operation, the cuff 152 and gripper pad 154 separate when the assembly 46b is at its uppermost position so that a lower region of the next available label can be received. At the commencement of the labeling cycle, an actuator drives the gripper assembly into contact with the cuff 152 so that the label is firmly gripped by the assembly 46b. The assembly 46b then moves downwardly along with the gripped label. The cam roller forming part of the base plate structure contacts the cam 168a and causes the base plate structure and hence the cuff 152 and gripper pad 154 to move outwardly to clear the periphery of the bottle being labeled. As the assembly 46b reaches the bottom of the stroke, the lever 165 contacts the cam and causes the gripper assembly to separate from the cuff thus releasing the label. Further downward movement then allows the cuff to completely release a label allowing the assembly to retract in order to engage another label.

Turning now to Figures 8 and 12-14, an improved label applying apparatus is illustrated. Although the label applying mechanism described above and shown in Figure 4 can be used, it is believed that the label applying assembly shown in Figures 8 and 12-14 can install a label on a container with less risk of distortion or damage, especially at the higher speeds achievable by the disclosed labeling machine.

The improved labeling assembly is adjustably clamped to the actuating rods 52a, 52b in substantially the same way the assembly shown in Figure 4 is clamped. As viewed in Figure 8, the labeling assembly includes left and right gripper assemblies 44a', 44b' connected to the slide rods 52a, 52b respectively. Each gripper assembly is effective to grip a lower portion of a label positioned at a labeling station (on the mandrel 40). The label is then pulled downwardly over the container at the labeling station. The gripper assemblies 44a', 44b' release the label when properly positioned on the container and then both are driven upwardly again to repeat the label applying cycle.

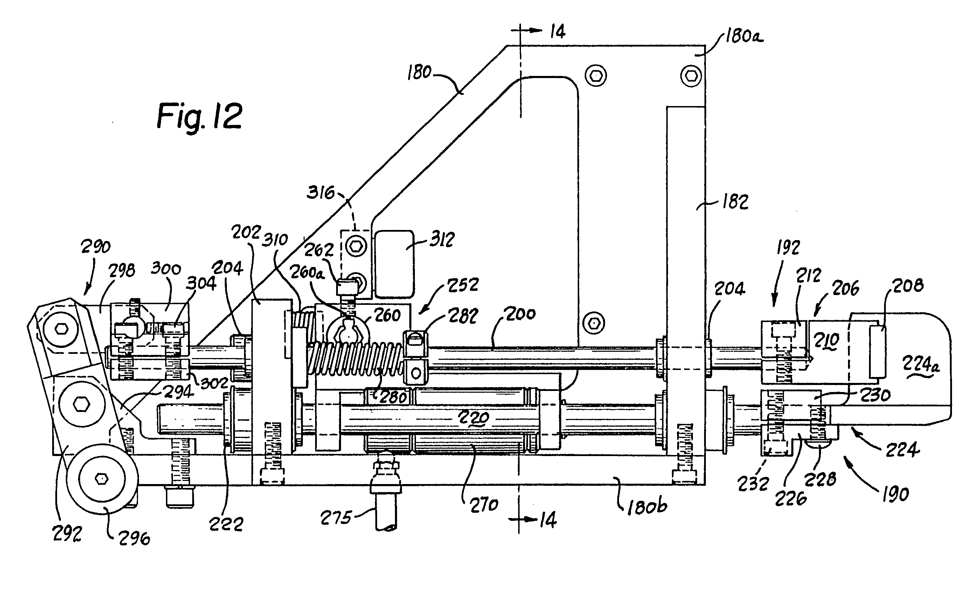

The gripper assemblies 44a', 44b' are similarly constructed and in effect are mirror images of each other. The detailed construction of the assembly 44a is illustrated in Figures 11-13. The gripper assembly 44a includes a rigid support frame 180 which is essentially L-shaped having a vertical wall 180a and a transverse wall 180b. A gusset plate 182 extends between the vertical and transverse walls and rigidizes the overall structure. The vertical wall 180a of the frame 180 mounts a pair of clamping blocks 184 by which each gripper assembly 44a', 44b' is adjustably clamped to respective slide rods 52a, 52b (shown in Figures 4 and 5). The frame 180 slidably mounts a cuff subassembly indicated generally by the reference character 190 and a gripper block subassembly indicated generally by the reference character 192. As shown best in Figure 8, the cuff and gripper block subassemblies 190, 192 cooperate to grip a lead label "L" of the chain or web of labels 34 when the gripper assemblies 44a', 44b' are in their uppermost positions, indicated in phantom by the reference character 196. The gripped label "L" is pulled downwardly over a bottle "B" as the gripper assemblies 44a', 44b' are driven downwardly by the drive system.

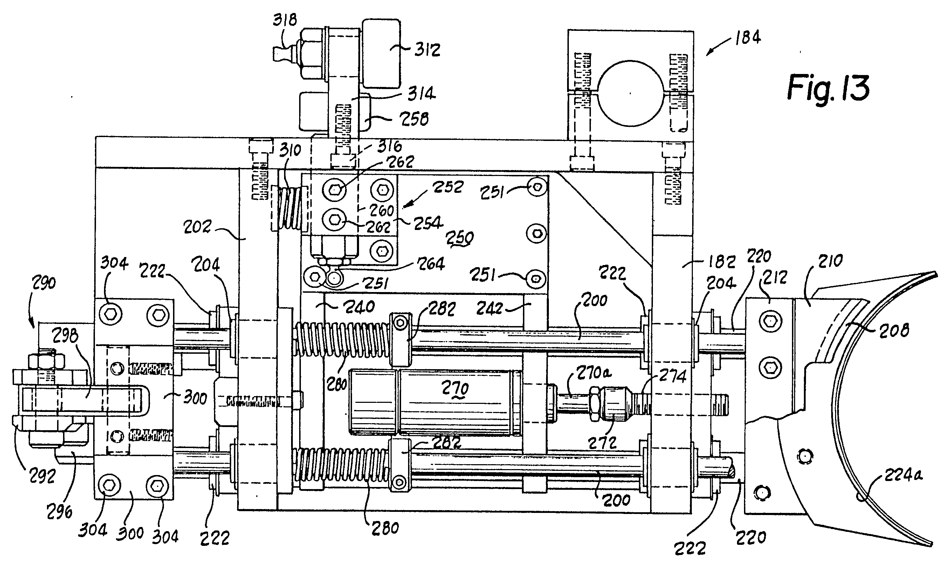

The gripper block subassembly 192, as seen best in Figures 12 and 13, includes a pair of slides 200 slidably supported for reciprocating movement by the gusset 182 and a spaced, parallel support wall 202 forming part of the assembly frame 180. The slides 200 are preferably supported by linear ball bearings 204 which are available from Thomson Industries, Inc. A gripper member 206 is clamped near the ends of the slides 200. The gripper member 206 includes a pair of spaced arcuate pads 208, preferably constructed from an elastomeric material which are fixed to a pad support block 210 which in turn is clamped to the slides 200 by a clamping bar 212.

The cuff subassembly 190 includes a pair of slides 220 which are also slidably supported by bearings 222 mounted in the gusset plate 182 and the support wall 202. Like the bearings 204, the bearings 222 are preferably linear ball bearings such as those available from Thomson Industries, Inc.

A cuff member 224 is mounted near the ends of the slides 220. The cuff member 224 defines an arcuate wall 224a which preferably conforms somewhat to the periphery of the bottle "B". The cuff member 224 is mounted to the ends of the slides 220 by a clamping arrangement comprising a lower clamp block 226, fastened to the cuff 224 by fasteners 228 and an upper clamp block 230 which is clampingly engaged by fasteners 232 that extend through the lower clamp block 226 and are threadedly received by the upper clamp block 230.

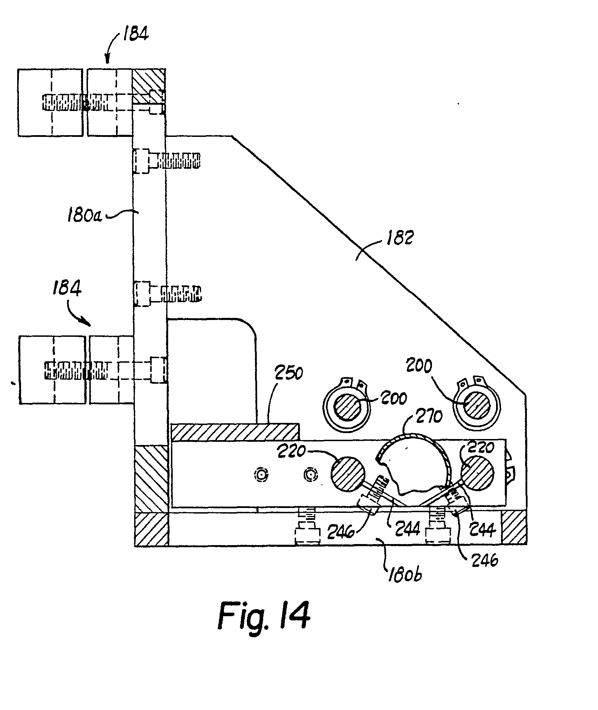

As seen best in Figure 13, a pair of spaced, parallel bars 240, 242 are clamped to the slides 220. Referring to Figure 14, the bars 240, 242 (only the bar 242 is shown), each include a slot 244 and a clamping screw 246 by which the bars are fixed in position to the slides 220.

Referring to both Figures 13 and 14, a platform 250 is rigidly fastened to and spans the bars 240, 242. A plurality of fasteners 251 secures the platform 250 to the bars 240, 242. The platform 250 not only fixes the spatial distance between the bars 240, 242 but also mounts a cam roller subassembly 252. The cam roller subassembly includes a mounting block 254 fastened to the platform 250 which adjustably supports a cam roller 258. The cam roller 258 is rotatable at the end of a non-rotating shaft 260 including a flat 260a (shown only in Figure 12) which is clamped in a predetermined axial position to the mounting block 254 by a pair of threaded fasteners 262. A grease fitting 264 mounted at the end of the shaft 260 facilitates lubrication of the cam roller.

An air actuator 270 preferably an air cylinder is mounted to the bar 242 and includes an actuating rod 270a carrying a threaded fitting 272. The fitting 272 abuttably engages a threaded pin 274 mounted in the gusset 182. An air line 275 (shown only in Figure 12) is connected to the cylinder 270.

When the air cylinder 270 is actuated to extend the actuating rod 270a, the abutting engagement between the fitting 272 and the pin 274 causes the cuff subassembly 190 to move leftwardly (as viewed in Figure 13) and engage the gripper subassembly 192. In particular, the arcuate surface 224a of the cuff 224 abuttably engages the gripper pads 208. In the preferred embodiment the leftward movement of the cuff subassembly 190 by the actuator 270 is limited by a mechanical stop within the air cylinder itself.

As best seen in Figures 12 and 13, the slide rods 200 of the gripper subassembly 192 are each spring biased by an associated spring 280 which acts between the frame wall 202 and associated adjustable collar 282. When the cylinder 270 is actuated to move the cuff assembly 190 leftwardly, the clamping force exerted by the gripper pads 208 on the surface 224a of the cuff 224 is determined by the extent of compression of the springs 280 which is adjustable by the collars 282.

Leftward and rightward movement of the gripper subassembly 192, independent of the cuff subassembly 190 is provided by a lever arrangement indicated generally by the reference character 290. The assembly 290 includes a lever 292 pivotally mounted to a pivot support block 294 which is fixed to the base plate 180b of the frame 180. The lower end (as viewed in Figure 12) of the lever 292 rotatably mounts a cam roller 296 whereas the upper end of the lever 292 is pivotally connected to a coupling link 298 that in turn is pivotally connected to a mounting block 300. The mounting block 300 is clamped to the slide rods 200 by a clamping bar 302 which threadedly receives fasteners 304 that extend downwardly from the mounting block 300. It should be apparent that transverse movement imparted to the cam roller 296 will produce attendant movement in the gripper subassembly 192. As will be explained, the cam roller 296 is engageable with a cam 306 (shown in Figure 8) forming part of the labeling machine to cause the gripper pads 208 to disengage the cuff 224 at a predetermined position in the labeling cycle.

The cam roller 258 supported by the mounting block 254 is also engageable with a cam 308 forming part of the labeling machine at predetermined operating positions. In the preferred arrangement, engagement with the cam 308 by the cam roller 258 produces leftward movement in cuff subassembly 190 (as viewed in Figure 12). It should be noted, that the mounting block 254 is biased rightwardly by a spring 310 and hence the overall cuff assembly 190 is biased rightwardly. As will be more fully explained, in normal operation, the cam roller 258 and associated cam 308 produce additional leftward movement in the cuff subassembly 190 after the actuator 270 has been actuated. The actuator 270 is mounted to the bar 242 and only abuttably engages the pin 274. Consequently, when the co-engagement between the cam roller 258 and associated cam 308 cooperate to produce the leftward movement in the cuff 224, the fitting 272 at the end of the actuator rod 270a disengages and separates from the threaded pin 274.

The frame 180 also mounts an additional cam roller 312 which is seen in Figure 13, having an axis oriented 90° with respect to the cam roller 258. The cam roller 312 is mounted in position by a support 314 which is secured to the vertical wall 180a of the frame 180 by fasteners 316. A grease fitting 318 facilitates lubrication of the cam roller. In the preferred embodiment, the cam roller 312 also coacts with the cam 308. The cam roller 312 engages a rear surface of the cam 308 as the assembly 44a' moves downwardly. The cam roller rigidizes the location of the gripper assemblies and prevents them from twisting about their associated slide rods 52a, 52b when the gripper lever 292 engages the cam 306. As should be apparent from Figure 13, the line of action for the lever 292 is spaced from the line of action for the cam roller 258. Thus, when the lever 292 engages the cam 306, a moment is exerted on the associated slide rod 52a. The cam roller 312 bears the force generated by the moment arm defined between the clamp 184 and the lever 292 and inhibits the assembly from twisting about the slide rod.

Turning now to Figure 8, the improved gripper assemblies 44a', 44b' operate as follows. At the commencement of a labeling cycle the drive system raises the slide rods 52a, 52b thereby raising the gripper assemblies 44a', 44b' to the uppermost position indicated in phantom by the reference character 196. In this position, a label L is located over the mandrel 40 and the cuffs 224 and gripper pads 208 are disengaged. As fully described in Patent No. 4,412,876 slots indicated generally by the reference character 322 are located at the bottom of the mandrel 40 which allow the cuff 224 and gripper pad 208 to engage a region of the label L. According to the preferred labeling method, the actuator 270 of each gripper assembly 44a', 44b' is energized to cause the cuff subassemblies 190 to move outwardly (with respect to the axis of the bottle B). In moving outwardly, the cuff engages the gripper pad 208 to clamp a lower portion of the label to the gripper assembly. This initial outward movement by the cuffs causes the portion of the label clamped by the gripper assembly to stretch uniformly across the rear surface 224a of the cuff 224.

The position of the cuff subassembly 190 and gripper pad assembly 192 after the first outward movement of the cuffs is shown in phantom and indicated by the reference character 330. Although the actuator 270 and associated linkage can be arranged to expand the cuffs 224 to clear the periphery of the bottle B and maintain this position, in the preferred embodiment, the cuffs are mechanically moved outwardly an additional amount by the cam 308. In particular, as the assemblies 44a', 44b' move downwardly, their associated cam rollers 258 engage a respective ramp 308a of the cams 308 and cause the cuff subassemblies 190 to move outwardly an additional distance. It should also be noted that, should a failure in the actuators 270 or pressure system occur, the cam rollers 258 and cams 308 will assure that the cuff assemblies 190 are driven outwardly to clear the periphery of a bottle held at the labeling station.

The label clamped between the cuff and the gripper subassemblies 190, 192 is pulled downwardly over the bottle B. Near the bottom of the labeling stroke, the gripper operating levers 292 contact the cams 306. The lower portion of the levers are driven inwardly which causes the gripper subassemblies 192 to expand outwardly, disengaging the cuff surface 224a thereby releasing the label. Once the gripper disengages the cuff surface 224a, the frictional engagement of the label with the bottle causes the label to cease motion. The labeling assemblies 44a', 44b' continue downwardly an additional amount to enable the cuffs to completely disengage from the label. The lowermost position at which the cuff and gripper rod subassemblies are disengaged is indicated in phantom by the reference character 332.

The drive system them retracts the assemblies 44a', 44b'. As the assemblies return to the uppermost position 196, the cuffs 224 move inwardly (the actuator 270 is depressurized) to enable the cuffs to enter the inside of the mandrel 40 so that the lower region of the next label is received between the gripper pads 208 and the rear surfaces 224a of the cuffs 224. The above described cycle is repeated to install a label on the next bottle.

With the preferred labeling apparatus, distortion in the label being applied is minimized. As indicated, the lower region of the label must be stretched outwardly in order to clear the periphery of the bottle. As the material thickness of the label is decreased, the risk of distorting the indicia printed on the label also increases. The disclosed improved labeling apparatus minimizes the occurrence of this distortion.

It should be apparent that the disclosed labeling machine enables tubular flexible labels to be applied to product containers, such as plastic soft drink bottles at a greatly increased rate. This is accomplished with a straightforward, uncomplicated mechanism.

Although the invention has been described with a certain degree of particularity, it should be understood that various changes can be made to it by those skilled in the art without departing from the spirit or scope of the invention as hereinafter claimed.

### Claims

1. A labeling apparatus for applying tubular, flexible labels to product containers, comprising:

a) a housing (10, 12, 14, 16) and frame structure (30, 32) defining a work station (26);

b) a labeling assembly (46) mounted for reciprocating movement on said frame structure;

c) said labeling assembly including a tubular label supply station (34) and being operative to move through a label applying stroke and a return stroke, and

d) drive means (70) for actuating said labeling assembly

characterised in that said drive means includes means (70) for driving said labeling assembly through said labeling stroke at a first speed and driving said labeling assembly through said return stroke at a second speed, said second speed being greater than said first speed.

2. A drive system for actuating a labeling assembly (46) forming a part of a labeling machine for applying tubular, flexible labels to product containers (41), comprising:

a) carriage means (50) mounted for reciprocal movement including means for mounting said labeling assembly, and

b) carriage actuating means

characterised in that said carriage actuating means includes a drive cam (70) defining an asymmetrical profile such that said labeling assembly (46) is driven through a label applying stroke by said carriage means (50) at an average speed that is less than an average speed at which said labeling assembly is return driven to a label receiving position by said carriage means.

3. The apparatus of claim 2 characterised in that said carriage actuating means (50) includes:

a) a pivotally mounted lever (60);

b) a cam roller (78) rotatably mounted by said lever and abuttably contacting said drive cam (70), and

c) coupling means (66, 68), connecting said lever to said carriage means such that arcuate reciprocal movement imparted to said lever (60) by said drive cam (70) produces reciprocal, rectilinear movement in said carriage means.

4. The apparatus of claim 2 characterised in that said carriage means (50) includes a pair of spaced slide rods (52a, 52b) to which said labeling assembly is adjustably clamped.

5. The apparatus of claim 3 characterised in that said lever (60) includes a sensing means (84, 86) for sensing contact between said cam roller (78) and said drive cam (70) and said sensing means being operative to deactivate said drive system upon sensing separation of said drive cam (70) and cam roller (78).

6. The apparatus of claim 2 characterised in that said drive system further includes a bottle advancing mechanism (24) coupled to said carriage actuating means.

7. The apparatus of claim 6 characterised in that said bottle advancing means (24) comprises an indexing cam (110) co-driven with said drive cam (70) so that synchronization between said label applying assembly and said bottle advancing mechanism is achieved.

8. The apparatus of claim 3 characterised in that said cam roller (78) is biased into abutting contact with said drive cam (70) by a fluid pressure actuator (80) pressurized with a predetermined fluid pressure thereby defining a fluid spring.

9. The apparatus of claim 8 characterised in that said apparatus includes means (80b) for pressurizing said actuator (80) to another predetermined fluid pressure to effect raising of said carriage means.

10. Apparatus according to claim 1 characterised in that means for stabilizing a product container (41) to be labelled at a labeling station is provided, comprising:

a) a pedestal (126) for supporting the container to be labeled in alignment with a label applying assembly;

b) a source of differential pressure (132) including a perforate support plate (130) by which said differential pressure is exerted on a region of said container;

c) valve means (150) actuated in coordination with said labeling assembly for controlling the communication of a differential pressure source with said perforate support plate, and

d) control means (152) for closing said valve means after a product container has been labeled and being further operative to reopen said valve means as a product container to be labeled is advanced onto said perforate support plate.

11. Apparatus according to claim 10 characterised in that said stabilization system includes an accumulating means for accumulating said differential pressure during a time when said valve means (150) is closed.

12. Apparatus according to claim 11 characterised in that said accumulating means includes conduits and a filter compartment (140).

13. The apparatus of claim 5 characterised in that brake means (90) is provided for arresting motion in said drive cam (70) when said sensing means (84, 86) senses a loss of contact between said cam roller (78) and said drive cam (70).

14. The apparatus of claim 13 characterised in that said brake means comprises a disc (90) co-driven with said drive cam (70) and a disc brake (90) energized by said sensing means (84, 86).

15. The apparatus of claim 1 characterised in that there is included a gripper assembly comprising:

a) a support frame (180) including means (184) for adjustably securing said frame to a reciprocating drive means (51);

b) a cuff subassembly (190) slidably mounted to said frame, said cuff subassembly including a cuff member (224) defining a clamping surface;

c) a clamp subassembly (192) reciprocally mounted to said frame, including a gripper means (206) engageable with said cuff clamping surface (152);

d) stop means for maintaining a spaced relationship between said cuff clamping surface (152) and said gripper means (206) when said gripper assembly is in a label receiving position;

e) biasing means (280) urging said gripper means towards said cuff member clamping surface;

f) actuating means (270) mounted to said frame and operative to move said cuff subassembly towards said clamp subassembly, and

g) release means (292) operative to retract said clamp subassembly to disengage said gripper means from said cuff member clamping surface.

16. The apparatus of claim 15 characterised in that said release means comprises a lever (292) pivotally mounted to said frame and coupled to said clamp subassembly, said lever being actuatable by a release cam (306) and operative to overcome said biasing means in order to move said gripper means away from said cuff clamping surface.

17. The apparatus of claim 15 characterised in that said cuff subassembly includes a cam follower (258) engageable with a cuff drive cam (308) and operative to cause said cuff subassembly to be driven outwardly with respect to a centerline of said labeling station, when said cam follower is actuated by said cam.

18. Apparatus according to claim 1 for applying tubular, flexible labels to a product container at a labeling station, characterised by

a) means for positioning a product container (41) to be labeled in a label applying position (26);

b) labeling assembly (46) for applying a label to a container (41) located at said label applying position;

c) said labeling assembly including a pair of gripper assemblies (44a, 44b) adjustably mounted to a reciprocating carriage means, and

d) each gripper assembly including:

i) a support frame (180);

ii) a cuff subassembly (190) mounted for reciprocal movement towards and away from a center-line of said label applying position;

iii) a fluid operated actuator (270) for driving said cuff subassembly to an expanded position;

iv) a clamp subassembly (192) slidably mounted to said support, said clamp subassembly including a gripper means;

v) spring means (280) biasing said clamp subassembly towards a clamping surface formed on said cuff subassembly;

vi) means for maintaining a spaced relationship between said clamping surface and said gripper means when said gripper assembly is in a label receiving position, and

vii) gripper release means (292) operative to move said gripper means away from said clamping surface when said label assembly is in a predetermined position.

19. Apparatus according to claim 18 characterised in that said gripper means comprises at least one friction pad (208) secured to said clamping subassembly.

20. Apparatus according to claim 18 or 19 characterised in that said gripper release means (292) further includes a release cam mounted at said labeling station in alignment with a path of travel of a release lever forming part of said gripper assembly, said release cam including a cam ramp engageable by said release lever of an associated gripper assembly as a label being applied reaches a desired position on said product container.

21. Apparatus according to claim 18, 19 or 20 characterised in that a cuff drive cam is associated with each gripper assembly and positioned at said labeling station in alignment with a cam follower forming part of each gripper assembly, said cuff drive cam being operative to maintain the cuff subassembly of the associated gripper assembly at its expanded position as said gripper assembly travels along said product container.

22. Apparatus according to any one of claims 18 to 21 characterised in that said cuff clamping surface conforms substantially to the periphery of the product container being labeled.

23. Apparatus according to any one of claims 18 to 22 characterised in that each gripper assembly further includes a stabilizing cam follower engageable with a cam surface located at said labeling station, said cam follower cooperating with said cam surface to inhibit misalignment of the gripper assembly as said gripper assembly moves through a label applying stroke.

24. A process for applying tubular, flexible labels to a product container (41), comprising:

a) positioning a container to be labeled at a labeling station (26);

b) advancing a chain of interconnected labels (34) until an end label is located at a predetermined position;

c) positioning a label applying assembly (46) at said predetermined position;

d) clamping a region of said end label to said label applying assembly;

e) driving said label applying assembly and clamped label toward said container (41) in order to pull said label over said container;

f) severing said end label from said chain of labels, and

g) releasing said label when said label is in a predetermined position on said bottle

characterised in that the label applying assembly and clamped label are driven towards said container at a first average speed selected to minimize stress on the label as it is pulled over the bottle and said labeling assembly is driven to said predetermined position at a second average speed greater than said first speed.

25. The process of claim 24 characterised in that said step of severing said label comprises the step of braking said chain of labels prior to the end label reaching said predetermined position on said bottle.

26. The process of claim 24 characterised in that said second average speed is substantially twice the first average speed.

27. The process of claim 24 characterised in that a region of said end label is expanded to a peripheral dimension greater than a peripheral dimension of said container to be labeled.

28. A process according to claim 27 characterised in that it is the lower region of said label which is expanded, said lower region of said label is clamped after said label has been expanded, said label is held in its expanded condition while being moved downwardly over said container, and said lower region of said label is released when said label is positioned on said container.

29. A process according to claim 28 characterised in that it includes the step of maintaining said labeling assembly in an expanded position until said assembly is returned to the label receiving position.

**Patentansprüche**

1. Etikettiervorrichtung zum Anbringen von rohrförmigen, flexiblen Etiketten an Produktbehältern, mit:

a) einem Gehäuse (10, 12, 14, 16) und einem Rahmen (30, 32), der eine Arbeitsstation (26) definiert;

b) eine Etikettiereinheit (46), die für eine hin- und hergehende Bewegung am Rahmen angebracht ist;

c) welche Etekettiereinheit eine Zuführstation (34) für rohrförmige Etiketten enthält und betreibbar ist, um sich durch einen Etikettenanbringhub und einen Rückkehrhub zu bewegen, und

d) einer Antriebseinrichtung (70) zum Betätigen der Etikettiereinheit,

dadurch gekennzeichnet, daß die Antriebseinrichtung eine Einrichtung (70) zum Antreiben der Etikettiereinheit durch den Etikettierhub mit einer ersten Geschwindigkeit und zum Antrieben der Etikettiereinheit durch den Rückkehrhub mit einer zweiten Geschwindigkeit enthält, wobei die zweite Geschwindigkeit größer ist als die erste Geschwindigkeit.

2. Antriebssystem zum Betätigen einer Etikettiereinheit (46), die einen Teil einer Etikettiermaschine zum Anbringen von rohrförmigen flexiblen Etiketten an Produktbehältern (41) bildet, mit:

a) einer Schlitteneinrichtung (50), die für eine hin- und hergehende Bewegung ist, enthaltend eine Einrichtung zum Befestigen der Etikettiereinheit, und

b) einer Schlittenbetätigungseinrichtung,

dadurch gekennzeichnet, daß die Schlittenbetätigungseinrichtung einen Antriebsnocken (70) enthält, der ein asymmetrisches Profil definiert, so daß die Etikettiereinheit (46) von der Schlitteneinrichtung (50) durch einen Etikettenanbringhub mit einer Durchschnittsgeschwindigkeit angetrieben wird, die kleiner ist als eine Durchschnittsgeschwindigkeit, mit der die Etikettenein heit durch die Schlitteneinrichtung eine Etikettenaufnahmeposition zurück angetrieben wird.

3. Vorrichtung nach Anspruch 2, dadurch gekennzeichnet, daß die Schlittenbetätigungseinrichtung (50)

a) einen schwenkbar befestigten Hebel (60);

b) eine Nockenrolle (78), die mit Hilfe des Hebels drehbar gelagert ist und am Antriebsnokken (70) anliegt, und

c) eine Kupplungseinrichtung (66, 88) enthält, die den Hebel mit der Schlitteneinrichtung derart verbindet, daß eine bogenförmige hin- und hergehende Bewegung, die dem Hebel (60) vom Antriebsnocken (70) erteilt wird, eine hin- und hergehende geradlinige Bewegung in der Schlitteneinrichtung erzeugt.

4. Vorrichtung nach Anspruch 2, dadurch gekennzeichnet, daß die Schlitteneinrichtung (50) ein Paar von mit Abstand voneinander vorgesehenen Gleitstangen (52a, 52b) enthält, an denen die Etikettiereinheit verstellbar festgeklemmt ist.

5. Vorrichtung nach Anspruch 3, dadurch gekennzeichnet, daß der Hebel (60) eine Fühleinrichtung (84, 86) zum Erfassen eines Kontakts zwischen der Nockenrolle (78) und dem Antriebsnocken (70) aufweist und die Fühleinrichtung betreibbar ist, um das Antriebssystem bei Erfassen einer Trennung zwischen Antriebsnocken (70) und Nockenrolle (78) zu entaktivieren.

6. Vorrichtung nach Anspruch 2, dadurch gekennzeichnet, daß das Antriebssystem weiters einen Flaschenvorschubmechanismus (24) aufweist, der mit der Schlittenbetätigungseinrichtung gekuppelt ist.

7. Vorrichtung nach Anspruch 6, dadurch gekennzeichnet, daß die Flaschenvorschubeinrichtung (24) einen Schaltnocken (110) aufweist, der gemeinsam mit dem Antriebsnocken (70) angetrieben ist, so daß eine Synchronisation zwischen der Etikettenanbringeinheit und dem Flaschenvorschubmechanismus erzielt ist.

8. Vorrichtung nach Anspruch 3, dadurch gekennzeichnet, daß die Nockenrolle (78) in die Anlageposition am Antriebsnocken (70) durch ein Fluiddruck-Betätigungsorgan (80) vorgespannt ist, das mit einem vorherbestimmten Fluiddruck beaufschlagt ist, wodurch eine Fluidfeder definiert ist.

9. Vorrichtung nach Anspruch 8, dadurch gekennzeichnet, daß die Vorrichtung eine Einrichtung (80b) zur Druckbeaufschlagung des Betätigungsorgans (80) mit einem anderen vorherbestimmten Fluiddruck aufweist, um ein Heben der Schlitteneinrichtung zu bewirken.

10. Vorrichtung nach Anspruch 1, dadurch gekennzeichnet, daß eine Einrichtung zum Stabilisieren eines zu etikettierenden Produktbehälters (41) an einer Etikettierstation vorgesehen ist, die

a) ein Auflager (126) zum Abstützen des zu etikettierenden Behälters in Ausrichtung mit einer Etikettenanbringeinheit;

b) eine Differentialdruckquelle (132) mit einer perforierten Stützplatte (130), durch die der Differentialdruck auf einen Bereich des Behälters ausgeübt wird;

c) eine Ventileinrichtung (150), die in Abstimmung mit der Etikettiereinheit zur Steuerung der Verbindung einer Differentialdruckquelle mit der perforierten Stützplatte betätigt wird, und

d) eine Steuereinrichtung (152) zum Schließen der Ventileinrichtung aufweist, nachdem ein Produktbehälter mit einem Etikett versehen wurde, und die weiters betätigbar ist, um die Ventileinrichtung wieder zu öffnen, wenn ein mit einem Etikett zu versehender Produktbehälter auf die perforierte Stützplatte vorbewegt wird.

11. Vorrichtung nach Anspruch 10, dadurch gekennzeichnet, daß das Stabilisiersystem eine Speichereinrichtung zum Aufspeichern des Differentialdrucks während einer Zeit aufweist, wenn die Ventileinrichtung (150) geschlossen ist.

12. Vorrichtung nach Anspruch 11, dadurch gekennzeichnet, daß die Speichereinrichtung Leitungen und ein Filterabteil (140) aufweist.

13. Vorrichtung nach Anspruch 5, dadurch gekennzeichnet, daß eine Bremseinrichtung (90) zum Anhalten der Bewegung im Antriebsnocken (70) vorgesehen ist, wenn die Fühlereinrichtung (84, 86) einen Verlust des Kontaktes zwischen der Nockenrolle (78) und dem Antriebsnocken (70) erfaßt.

14. Vorrichtung nach Anspruch 13, dadurch gekennzeichnet, daß die Bremseinrichtung eine Scheibe (90), die zusammen mit dem Antriebsnocken (70) angetrieben ist, und eine Scheibenbremse (90) aufweist, die von der Fühleinrichtung (84, 86) mit Energie versorgt wird.

15. Vorrichtung nach Anspruch 1, dadurch gekennzeichnet, daß eine Greifereinheit enhalten ist mit:

a) einem Traggestell (180), das eine Einrichtung (184) zum verstellbaren Befestigen des Gestells an einer hin- und hergehenden Antriebseinrichtung (51) aufweist;

b) einer Manschetten-Untergruppe (190), die am Gestell gleitend angebracht ist, und die einen Manschettenteil (224) aufweist, der eine Klemmfläche definiert;

c) einer Klemm-Untergruppe (192), die hin- und herbewegbar am Gestell angebracht ist, mit einer Greifereinrichtung (206), die mit der Manschettenklemmfläche (152) in Eingriff bringbar ist;

d) einer Stoppeinrichtung zum Einhalten eines Abstandsverhältnisses zwischen der Manschettenklemmfläche (152) und der Greifereinrichtung (206), wenn die Greifereinheit in einer Etikettenaufnahmeposition vorliegt;

e) einer Vorspanneinrichtung (280), die die Greifereinrichtung in Richtung Manschettenteil-Klemmfläche drückt;

f) einer Betätigungseinrichtung (270), die am Gestell angebracht und betreibbar ist, um die Manschetten-Untergruppe in Richtung zur Klemm-Untergruppe hin zu bewegen, und

g) einer Freigabeeinrichtung (292), die betreibbar ist, um die Klemm-Untergruppe zurückzuziehen, um die Greifereinrichtung von der Manschettenteil-Klemmfläche zu lösen.

16. Vorrichtung nach Anspruch 15, dadurch gekennzeichnet, daß die Freigabeeinrichtung einen Hebel (292) aufweist, der am Gestell schwenkbar befestigt und mit der Klemm-Untergruppe gekuppelt ist, wobei der Hebel durch einen Freigabenocken (306) betätigbar und betreibbar ist, um die Vorspanneinrichtung zu überwinden, um die Greifereinrichtung weg von der Manschetten-Klemmfläche zu bewegen.

17. Vorrichtung nach Anspruch 15, dadurch gekennzeichnet, daß die Manschetten-Untergruppe einen Nockenstößel (258) aufweist, der mit einem Manschettenantriebsnocken (308) in Eingriff bringbar und betreibar ist, um zu bewirken, daß die Manschetten-Untergruppe auswärts bezüglich einer Mittenlinie der Etikettierstation angetrieben wird, wenn der Nockenstößel vom Nocken betätigt wird.

18. Vorrichtung nach Anspruch 1, zum Anbringen von rohrförmigen flexiblen Etiketten an einem Produktbehälter in einer Etikettierstation, gekennzeichnet durch

a) eine Einrichtung zum Positionieren eines Produktbehälters (41), der zu etikettieren ist, in einer Etikettenanbringposition (26);

b) eine Etikettiereinheit (46) zum Anbringen eines Etiketts an einem in der Etikettenanbringposition angeordneten Behälter (41);

c) wobei die Etikettiereinheit ein Paar Greifereinheiten (44a, 44b) aufweist, die einstellbar an einer hin- und hergehenden Schlitteneinrichtung angebracht sind, und wobei

d) jede Greiferanordnung
i) einen Tragrahmen (180);
ii) eine Manschetten-Untergruppe (190), die für eine hin- und hergehende Bewegung in Richtung zu und von einer Mittenlinie der Etikettenanbringposition angebracht ist;
iii) ein fluidbetätigtes Betätigungsorgan (270) zum Antreiben der Manschetten-Untergruppe in eine ausgefahrene Position;
iv) eine Klemm-Untergruppe (192), die am Träger verschiebbar angebracht ist und eine Greifereinrichtung enthält;
v) eine Federeinrichtung (280), die die Klemm-Untergruppe in Richtung einer Klemmfläche vorspannt, die an der Manschetten-Untergruppe gebildet ist;
vi) eine Einrichtung zum Einhalten eines Abstandsverhältnisses zwischen der Klemmfläche und der Greifereinrichtung, wenn die Greifereinheit in einer Etikettenaufnahmeposition ist, und
vii) eine Greiferfreigabeeinrichtung (292) aufweist, die betreibbar ist, um die Greifereinrichtung weg von der Klemmfläche zu bewegen, wenn sich die Etiketteneinheit in einer vorherbestimmten Position befindet.

19. Vorrichtung nach Anspruch 18, dadurch gekennzeichnet, daß die Greifereinrichtung zumindest ein Reibungskissen (208) aufweist, das an der Klemm-Untergruppe befestigt ist.

20. Vorrichtung nach Anspruch 18 oder 19, dadurch gekennzeichnet, daß die Greiferfreigabeeinrichtung (292) weiter einen Freigabenocken aufweist, der an der Etikettierstation in Ausrichtung zu einem Bewegungspfad eines Freigabehebels angebracht ist, der einen Teil der Greifereinheit bildet, wobei der Freigabenocken eine Nockenrampe aufweist, mit der der Freigabehebel einer zugehörigen Greifereinheit in Eingriff bringbar ist, wenn ein anzubringendes Etikett eine gewünschte Position am Produktbehälter erreicht.

21. Vorrichtung nach Anspruch 18, 19 oder 20, dadurch gekennzeichnet, daß ein Manschettenantriebsnocken jeder Greifereinheit zugeordnet und an der Etikettierstation in Ausrichtung zu einem Nockenstößel positioniert ist, der einen Teil einer jeden Greifereinheit bildet, wobei der Manschettenantriebsnocken betreibbar ist, um die Manschetten-Untergruppe der zugehörigen Greifereinheit in ihrer ausgefahrenen Position zu halten, wenn sich die Greifereinheit längs des Produktbehälters bewegt.

22. Vorrichtung nach einem der Ansprüche 18 bis 21, dadurch gekennzeichnet, daß die Manschettenklemmfläche im wesentlichen konform zum Umfang des zu etikettierenden Produktbehälters ist.

23. Vorrichtung nach einem der Ansprüche 18 bis 22, dadurch gekennzeichnet, daß jede Greifereinheit weiters einen Stabilisierungsnockenstößel aufweist, der mit einer Nockenfläche in Eingriff bringbar ist, die an der Etikettierstation angeordnet ist, wobei der Nockenstößel mit der Nockenfläche zusammenarbeitet, um eine Fehlausrichtung der Greifereinheit zu verhindern, wenn sich die Greifereinheit durch einen Etikettenanbringhub bewegt.

24. Verfahren zum Anbringen von rohrförmigen flexiblen Etiketten an einem Produktbehälter (41), bei dem:

a) ein zu etikettierender Behälter in einer Etikettierstation (26) in Position gebracht wird;

b) eine Kette von untereinander verbundenen Etiketten (34) vorbewegt wird, bis ein endseitiges Etikett in einer vorherbestimmten Position angeordnet ist;

c) eine Etikettenanbringeinheit (46) in der vorherbestimmten Position in Position gebracht wird;

d) ein Bereich des endseitigen Etiketts an der Etikettenanbringeinheit festgeklemmt wird;

e) die Etikettenanbringeinheit und das festgeklemmte Etikett in Richtung zum Behälter (41) angetrieben wird, um das Etikett über den Behälter zu ziehen;

f) das endseitige Etikett von der Kette von Etiketten abgetrennt wird, und

g) das Etikett freigegeben wird, wenn es in einer vorherbestimmen Position auf der Flasche vorliegt, dadurch gekennzeichnet, daß die Etikettenanbringeinheit und das festgeklemmte Etikett in Richtung zum Behälter mit einer ersten Durchschnittsgeschwindigkeit angetrieben werden, die ausgewählt wird, um die Beanspruchung des Etiketts, während es über die Flasche gezogen wird, zu minimieren, und daß die Etikettiereinheit in die vorherbestimmte Position mit einer zweiten Durchschnittsgeschwindigkeit angetrieben wird, die größer ist als die erste Geschwindigkeit.

25. Verfahren nach Anspruch 24, dadurch gekennzeichnet, daß der Schritt des Abtrennens des Etiketts den Schritt des Bremsens der Kette von Etiketten umfaßt, bevor das endseitige Etikett die vorherbestimmte Position auf der Flasche erreicht.

26. Verfahren nach Anspruch 24, dadurch gekennzeichnet, daß die zweite Durchschnittsgeschwindigkeit im wesentlichen das zweifache der ersten Durchschnittsgeschwindigkeit beträgt.

27. Verfahren nach Anspruch 24, dadurch gekennzeichnet, daß ein Bereich des endseitigen Etiketts auf eine Umfangsabmessung ausgeweitet wird, die größer ist als eine periphere Abmessung des zu etikettierenden Behälters.

28. Verfahren nach Anspruch 27, dadurch gekennzeichnet, daß der untere Bereich des Etiketts ausgeweitet wird, wobei der untere Bereich des Etiketts festgeklemmt wird, nachdem das Etikett ausgeweitet wurde, das Etikett in seinem ausgeweiteten Zustand gehalten wird, während es abwärts über den Behälter bewegt wird, und der untere Bereich des Etiketts freigegeben wird, wenn das Etikett in Position am Behälter gebracht ist.

29. Verfahren nach Anspruch 28, dadurch gekennzeichnet, daß es den Schritt des Haltens der Etikettiereinheit in einer ausgefahrenen Position aufweist, bis die Einheit in die Etikettenaufnahmeposition zurückgeführt wird.

**Revendications**

1. Appareil d'étiquetage pour la mise en place d'étiquettes tubulaires souples sur des conteneurs de produits, qui comprend:

a) un boîtier (10, 12, 14, 16) et une ossature (30, 32) qui constituent un poste de travail (26);

b) un dispositif d'étiquetage (46) monté sur l'ossature de manière à effectuer un mouvement de va-et-vient;

c) ce dispositif d'étiquetage comprenant un poste d'alimentation (34) qui amène les étiquettes tubulaires et fonctionnant en effectuant une course pour la mise en place d'une étiquette et une course de retour, et

d) des moyens de commande (70) pour la mise en action du dispositif d'étiquetage, caractérisé en ce que ces moyens de commande comprennent des moyens (70) qui font effectuer au dispositif d'étiquetage sa course d'étiquetage à une première vitesse et sa course de retour à une deuxième vitesse, cette deuxième vitesse étant supérieure à la première.

2. Système de commande pour la mise en action d'un dispositif d'étiquetage (46) faisant partie d'un appareil d'étiquetage pour la mise en place d'étiquettes tubulaires souples sur des conteneurs de produits (41), qui comprend:

a) des dispositifs de transport (50) montés de manière à effectuer un mouvement de va-et-vient et comprenant des moyens permettant le montage du dispositif d'étiquetage et,

b) des moyens de mise en action des dispositifs de transport, caractérisé en ce que ces moyens de mise en action du dispositif de transport comprennent une came de commande (70) qui présente un profil dissymétrique, de telle manière que le dispositif de transport (50) entraîne le dispositif d'étiquetage (46) pendant la course d'étiquetage à une vitesse moyenne qui est inférieure à la vitesse moyenne à laquelle ce même dispositif d'étiquetage est ramené par le dispositif de transport, à la position dans laquelle il reçoit l'étiquette.

3. Dispositif selon la revendication 2, caractérisé en ce que le dispositif de transport (50) comprend:

a) un levier (60) monté de manière à pouvoir pivoter;

b) un galet de came (78) monté de telle manière à pouvoir tourner en liaison avec le levier et se déplaçant au contact de la came de commande (70), et

c) des moyens d'accouplement (66, 68) reliant le levier au dispositif de transport, de telle manière que le mouvement de va-et-vient suivant un arc imprimé au levier (60) par la came de commande (70) se transforme en un mouvement de va-et-vient rectiligne du dispositif de transport.

4. Dispositif selon la revendication 2, caractérisé en ce que le dispositif de transport (50) comprend un couple de bielles (52a, 52b) qui sont situées à certaine distance l'une de l'autre et sur lesquelles le dispositif d'étiquetage est serré dans la position réglable.

5. Dispositif selon la revendication 3, caractérisé en ce que le levier (60) comporte un organe sensible (84, 86) réagissant au contact entre le galet de came (78) et la came de commande (70), cet organe sensible intervenant pour mettre hors d'action le système de commande en cas de séparation de la came de commande (70) et du galet de came (78).

6. Dispositif selon la revendication 2, caractérisé en ce que le système de commande comprend également un mécanisme (24) qui fait avancer les bouteilles et qui est accouplé avec les moyens de mise en action du dispositif de transport.

7. Dispositif selon la revendication 6, caractérisé en ce que le mécanisme (24) qui fait avancer les bouteilles comprend une came de repérage (110) qui est entraînée en même temps que la came de commande (70), qui assure la synchronisation entre le dispositif d'étiquetage et le dispositif qui fait avancer les bouteilles.

8. Dispositif selon la revendication 3, caractérisé en ce que le galet de came (78) est poussé, de manière à être en contact avec la came de commande (70), par un dispositif (80) qui agit sous la pression d'un fluide, et qui est soumis à une pression de fluide déterminée, ce qui en fait un ressort à fluide.

9. Dispositif selon la revendication 8, caractérisé en ce qu'il comporte des moyens (80b) permettant de soumettre le dispositif (80) à une autre pression de fluide déterminée, de manière à faire monter le dispositif de transport.

10. Dispositif selon la revendication 1, caractérisé en ce qu'il comporte des moyens immobilisant le conteneur de produit (41) qui doit être muni d'une étiquette au poste d'étiquetage et comprenant:

a) un support (126) qui soutient le conteneur qui doit être muni de l'étiquette et le maintient dans l'alignement d'un dispositif d'étiquetage;

b) une source de pression différentielle (123) qui comprend une plaque support perforée (130) par laquelle la pression différentielle est exercée sur une zone du conteneur;

c) des soupapes (150) qui sont mises en action en synchronisme avec le fonctionnement du dispositif d'étiquetage, de manière à commander la liaison entre la source de pression différentielle et la plaque support perforée, et

d) des moyens de commande (152) permettant de fermer les soupapes en question après que l'étiquette a été mise en place sur le conteneur de produit, et d'ouvrir de nouveau ces soupapes lorsqu'un conteneur de produits qui doit recevoir son étiquette est amené sur la plaque support-perforée.

11. Dispositif selon la revendication 10, caractérisé en ce que le système d'immobilisation comprend des moyens permettant d'accumuler la pression différentielle pendant que les soupapes (150) sont fermées.

12. Dispositif selon la revendication 11, caractérisé en ce que les moyens d'accumulation en question comprennent des conduits et un compartiment à filtre (140).

13. Dispositif selon la revendication 5, caractérisé en ce qu'il comporte des moyens de freinage (90) qui arrêtent le mouvement de la came de commande (70) lorsque l'organe sensible (84, 86) détecte un manque de contact entre le galet de came (78) et la came de commande (70).

14. Dispositif selon la revendication 13, caractérisé en ce que ces moyens de freinage comprennent un disque (90) qui est entraîné en même temps que la came de commande (70) et un frein à disque (90) mis en action par l'organe sensible (84, 86).

15. Dispositif selon la revendication 1, caractérisé en ce qu'il comporte un dispositif d'attelage comprenant:

a) un cadre de support (180) qui comprend des moyens (184) permettant de fixer d'une manière réglable le cadre en question à des moyens (51) de commande d'un mouvement de va-et-vient,

b) un dispositif à manchette (190) qui est monté de manière à pouvoir glisser sur ce cadre et comprend une pièce en forme de manchette (224) qui détermine une surface de serrage,

c) un dispositif de serrage (192) qui est monté de manière à pouvoir effectuer un mouvement de va-et-vient sur le cadre et comprend un dispositif d'attelage (206) qui peut se mettre en prise avec la surface de serrage (152) du dispositif à manchette,

d) des moyens d'arrêt permettant de maintenir une certaine distance entre la surface de serrage (152) du dispositif à manchette et le dispositif d'attelage (206) lorsque le dispositif d'attelage se trouve dans une position permettant la mise en place d'une étiquette,

e) des moyens de poussée (280) poussant le dispositif d'attelage vers la surface de serrage du dispositif à manchette,

f) des moyens de mise en action (270) montés sur le cadre et assurant le déplacement du dispositif à manchette vers le dispositif de serrage et,

g) des moyens de desserage (292) assurant le retrait du dispositif de serrage de manière à séparer le dispositif d'attelage de la surface de serrage de la pièce en forme de manchette.

16. Dispositif selon la revendication 15 caractérisé en ce que les moyens de desserage en question comprennent un levier (292) monté de manière à pouvoir pivoter sur le cadre et accouplé au dispositif de serrage, ce levier pouvant être mis en action par une came de desserrage (306) et intervenant pour s'opposer efficacement à l'action des moyens de poussée de manière à écarter le dispositif d'attelage de la surface de serrage du dispositif à manchette.

17. Dispositif selon la revendication 15, caractérisé en ce que le dispositif à manchette comporte un galet de came (258) qui est associé à une came d'entraînement (308) du dispositif à manchette et qui intervient pour écarter le dispositif à manchette vers l'extérieur d'une ligne centrale du poste d'étiquetage lorsque le galet de came est mis en action par la came en question.

18. Dispositif selon la revendication 1, pour la mise en place d'étiquettes tubulaires souples sur un conteneur de produit dans un poste d'étiquetage caractérisé en ce qu'il comporte:

a) des moyens permettant de positionner un conteneur de produit (41) qui doit être muni d'une étiquette dans une position d'étiquetage (26),

b) un dispositif d'étiquetage (46) mettant en place une étiquette sur un conteneur (41) placé dans la position d'étiquetage en question,

c) ce dispositif d'étiquetage comprenant un couple de dispositifs d'attelage (44a, 44b) monté d'une manière réglable sur un dispositif de transport pouvant effectuer un mouvement de va-et-vient, et

d) chaque dispositif d'attelage comprenant:

I) un cadre de support (180),

II) un dispositif à manchette (190) monté de manière à pouvoir effectuer un mouvement de va-et-vient pour se rapprocher et s'écarter d'une ligne centrale de la position d'étiquetage en question,

III) un dispositif de commande (270) qui agit sous la pression d'un fluide pour amener le dispositif à manchette dans une position d'extension,

IV) un dispositif de serrage (192) monté de manière à pouvoir glisser sur le support, ce dispositif de serrage comprenant un dispositif d'attelage,

V) un dispositif élastique (280) qui pousse le dispositif de serrage vers une surface de serrage ménagée sur le dispositif à manchette,

VI) des moyens assurant le maintien d'une certaine distance entre la surface de serrage et le dispositif d'attelage lorsque le dispositif d'attelage se trouve dans une position d'étiquetage et,

VII) des moyens (292) de desserrage de l'attelage qui interviennent pour séparer le dispositif d'attelage de la surface de serrage lorsque le dispositif d'étiquetage se trouve dans une position déterminée à l'avance.

19. Dispositif selon la revendication 18, caractérisé en ce que le dispositif d'attelage comprend au moins un tampon de frottement (208) fixé au dispositif de serrage.

20. Dispositif selon l'une des revendications 18 ou 19, caractérisé en ce que les moyens (292) de desserage de l'attelage comprennent également une came de desserrage qui, au poste d'étiquetage se trouve dans l'alignement d'un trajet de déplacement d'un levier de desserage qui fait partie du dispositif d'attelage, cette came de desserrage comprenant une rampe de came qui peut se mettre en prise avec le levier de desserrage d'un dispositif d'attelage associé lorsqu'une étiquette mise en place arrive à la position voulue sur le conteneur de produit.

21. Dispositif selon une des revendications 18, 19 ou 20, caractérisé en ce qu'une came de commande de manchette est associée à chaque dispositif d'attelage et positionnée, au poste d'étiquetage en question dans l'alignement d'un galet de came qui fait partie du dispositif d'attelage, la came de commande de manchette en question intervenant pour maintenir le dispositif à manchette du dispositif d'attelage associé dans sa position d'extension lorsque ce dispositif d'attelage se déplace le long du conteneur de produit.

22. Dispositif selon l'une des revendications 18 à 21, caractérisé en ce que la surface de serrage de la manchette est adaptée à la périphérie du conteneur de produit qui est muni d'une étiquette.

23. Dispositif selon une des revendications 18 à 22, caractérisé en ce que chaque dispositif d'attelage comprend également un galet de came d'immobilisation qui peut se mettre en prise avec une surface de came située dans le poste d'étiquetage, ce galet de came coopérant avec la surface de came pour empêcher tout défaut d'alignement du dispositif d'attelage lorsque ce dispositif d'attelage se déplace au cours d'une course d'étiquetage.

24. Procédé de mise en place d'étiquettes tubulaires souples sur un conteneur de produit (41) qui consiste à:

a) positionner un conteneur qui doit recevoir une étiquette dans un poste d'étiquetage (26),

b) faire avancer une série d'étiquettes (34) reliées les unes aux autres jusqu'à ce qu'une étiquette d'extrémité soit placée dans une position déterminée à l'avance,

c) positionner un dispositif d'étiquetage (46) dans la position déterminée à l'avance,

d) assembler par serrage une partie de cette étiquette d'extrémité au dispositif d'étiquetage,

e) déplacer le dispositif d'étiquetage et l'étiquette serrée vers le conteneur (41) pour tirer l'étiquette sur le conteneur,

f) séparer l'étiquette du reste de la série des étiquettes, et

g) desserrer l'étiquette lorsque cette étiquette se trouve dans une position déterminée sur la bouteille, caractérisé en ce que le dispositif d'étiquetage et l'étiquette fixée sont transportés vers le conteneur à une première vitesse moyenne choisie de manière à réduire les contraintes exercées sur l'étiquette pendant qu'elle est tirée sur la bouteille et que le dispositif d'étiquetage est amené à la position déterminée à l'avance à une deuxième vitesse moyenne supérieure à la première vitesse.

25. Procédé selon la revendication 24, caractérisé en ce que l'opération consistant à séparer l'étiquette comprend l'opération consistant à freiner la série d'étiquettes conjointes avant que l'étiquette d'extrémité n'atteigne la position déterminée à l'avance sur la bouteille.

26. Procédé selon la revendication 24, caractérisé en ce que la deuxième vitesse moyenne est sensiblement double de la première vitesse moyenne.

27. Procédé selon la revendication 24, caractérisé en ce qu'une zone de l'étiquette d'extrémité est étirée de manière que sa dimension périphérique soit supérieure à la dimension périphérique du conteneur sur lequel l'étiquette doit être mise en place.

28. Procédé selon la revendication 27, caractérisé en ce que c'est la zone inférieure de l'étiquette qui est étirée, que cette zone inférieure de l'étiquette est serrée après que l'étiquette a été étirée, que cette étiquette est maintenue en état d'extension pendant qu'elle est déplacée vers le bas sur le conteneur et que la zone inférieure de l'étiquette est libérée lorsque l'étiquette est mise en place sur le conteneur.

29. Procédé selon la revendication 28, caractérisé en ce qu'il comprend l'opération consistant à maintenir le dispositif d'étiquetage en position d'extension jusqu'à ce qu'il soit ramené à la position de mise en place de l'étiquette.

Fig. 1

Fig. 2

Fig. 3

*Fig. 4*

Fig. 5

Fig.6

5

Fig.7

EP 0 174 763 B1

Fig. 8

150

152

160

156

158

152a

Fig. 9

152a

158

160

158

158

154

Fig. 11

Fig. 10

Fig. 12

EP 0 174 763 B1

Fig. 13

EP 0 174 763 B1

*Fig. 14*